**Europäisches Patentamt**

(19) **European Patent Office**

**Office européen des brevets**

(11) Veröffentlichungsnummer: **0 038 012 B1**

(12) # EUROPÄISCHE PATENTSCHRIFT

(45) Veröffentlichungstag der Patentschrift:
06.02.85

(51) Int. Cl.⁴: **A 01 F 12/40**

(21) Anmeldenummer: **81102611.1**

(22) Anmeldetag: **07.04.81**

(54) **Mähdrescher.**

(30) Priorität: **11.04.80 DE 3014023**

(43) Veröffentlichungstag der Anmeldung:
**21.10.81 Patentblatt 81/42**

(45) Bekanntmachung des Hinweises auf die Patenterteilung:
**06.02.85 Patentblatt 85/6**

(84) Benannte Vertragsstaaten:
**DE FR GB SE**

(56) Entgegenhaltungen:
**DE - A - 1 905 034**
**DE - B - 2 810 176**
**DE - C - 946 097**
**FR - A - 2 040 361**
**FR - A - 2 371 134**

(73) Patentinhaber: **DEERE & COMPANY, 1 John Deere Road, Moline Illinois 61265 (US)**

(72) Erfinder: **Stachnik, Wilfreid, Schlesienstrasse 22, D-6600 Zweibrücken (DE)**
Erfinder: **Rohwedder, Helmut, Rosenstrasse 12, D-6600 Zweibrücken (DE)**
Erfinder: **Dannigkeit, Helmut, Haus-Nr. 11, D-2134 Horstedt (DE)**

(74) Vertreter: **Sartorius, Peter et al, DEERE & COMPANY European Office, Patent Department Postfach 503 Steubenstrasse 36-42, D-6800 Mannheim 1 (DE)**

## Beschreibung

Die Erfindung bezieht sich auf einen Mähdrescher mit einer Vorrichtung zum Erfassen einer Störgrösse an Arbeitsorganen und mit einer elektrisch betätigbaren, zwischen Verbrennungskraftmaschine und dem Arbeitsorgan vorgesehenen Kupplung und mindestens einem in Abhängigkeit der Drehzahl der drehenden Teile betätigbaren Schalter zum Öffnen oder Schliessen eines Stromkreises für die Vorrichtung zur Erfassung der Störgrösse.

Es ist bereits ein Strohhäcksler für Mähdrescher bekannt (siehe Betriebsanleitung 975 Hydro 4, 985 und 985 Hydro 4 Mähdrescher, John Deere Werke Zweibrücken, Druckvermerk OM-Z 91 310, Ausgabe L 9), der von einer Verbrennungskraftmaschine angetrieben wird, wobei zwischen der Verbrennungskraftmaschine und einer Klauenkupplung für den Strohhäcksler ein Zugmittelgetriebe vorgesehen ist. Bei sehr starkem Strohanfall bzw. Überlast am Strohhäcksler rutscht der Riemen des Zugmittelgetriebes durch, so dass der Häcksler zum Stillstand kommt, ohne dass die Bedienungsperson am Mähdrescherstand etwas bemerkt. Da bei durchrutschendem Riemen der Häcksler nicht mehr arbeitet, können infolge übermässiger Strohansammlung, insbesondere unterhalb der Schüttler, Beschädigungen am Schüttler oder an der Schüttlerwelle auftreten.

Ferner ist eine Anzeigevorrichtung für den Betriebszustand bzw. Stillstand einer umlaufenden Welle bei selbstfahrenden Mähdreschern (gemäss dem Oberbegriff des Patentanspruches 1) bekannt (DE-A-1 905 034), die hierzu einen Kontaktgeber aufweist, der beim Stillstand einer der Wellen eine Schliessung eines elektrischen Stromkreises herbeiführt und dadurch ein am Fahrerstand vorgesehenes Symbol zum Aufleuchten bringt und hierdurch eine Bedienungsperson über den Stillstand der Welle informiert. Durch das Zusammenwirken des jeweiligen Kupplungsstromkreises der elektromagnetischen Dreschwerkskupplung mit dem Kontaktgeber wird also lediglich der entsprechende Stromkreis für das Symbol zur Information der Bedienungsperson geschlossen und keine automatische Steuerung der Kupplung herbeigeführt, um somit Beschädigungen an den einzelnen Arbeitsorganen zu vermeiden, die somit bei Überlast auftreten können, wenn die Bedienungsperson das Aufleuchten des Symbols nicht wahrnimmt bzw. ignoriert. Aus diesem Grunde sind solche Anzeigevorrichtungen nicht immer geeignet, Beschädigungen an den Arbeitsorganen auszuschalten.

Demgegenüber liegt der Erfindung die Aufgabe zugrunde, Nachteile zu beseitigen, insbesondere den Strohhäcksler mit einer Sicherheitsschaltvorrichtung auszurüsten, die bei Überlast des Strohhäckslers ein Abschalten des Strohhäckslers von der Antriebsvorrichtung gewährleistet.

Diese Aufgabe ist dadurch gelöst worden, dass neben dem drehzahlabhängigen ersten Schalter ein über diesen beeinflussbarer zweiter Schalter zum Abschalten der Kupplung vom Arbeitsorgan und ein im Stromkreis des ersten Schalters liegendes Zeitglied vorgesehen ist. Hierdurch lässt sich auf einfache Weise bei einer am Strohhäcksler auftretenden Störgrösse über einen vom Häcksler betätigbaren Schalter die Stromversorgung zur Betätigung der Kupplung ohne weiteres unterbrechen. Auf diese Weise können insbesondere Beschädigungen an den Antriebsmitteln des Strohhäckslers vermieden werden. Durch die Verwendung des Zeitgliedes für den Stromkreis des ersten Schalters wird gewährleistet, dass bei Erreichen nur einer bestimmten Drehzahl ein Schaltvorgang durchgeführt wird. Hierzu ist es gemäss der Erfindung vorteilhaft, dass einem Hebel zur Betätigung einer Dreschvorrichtung ein Schliesser zugeordnet ist, der einerseits mit einer Stromquelle, andererseits über einen über die Schwenkbewegung des Strohhäckslers betätigbaren Schliesser ein erstes und zweites Relais mit Strom versorgt, wobei das zweite Relais über einen dritten Schalter den Stromkreis zwischen Stromquelle und Kupplung schliesst, während das erste Relais bei Auftreten einer Störgrösse am Strohhäcksler über den zweiten Schalter den Stromkreis zwischen Stromquelle und Kupplung unterbricht und den Stromkreis einer Warnanlage schliesst. Da dem Hebel zur Betätigung der Dreschvorrichtung gleichzeitig ein Schliesser zugeordnet ist, der den Stromkreis zwischen der Stromquelle und der Kupplung schliesst, kann der Häcksler nur dann eingeschaltet werden, wenn auch die Dreschvorrichtung eingesetzt wird. Durch die Verwendung des Zeitgliedes zwischen dem lastabhängigen Schalter für den Häcksler und dem zweiten Relais wird also gewährleistet, dass das Relais nur bei einer bestimmten Drehzahl geschaltet wird, d.h. wenn beispielsweise der Häcksler von einer Drehzahl 0 auf eine Drehzahl von 2000 Umdrehungen pro Minute hochgefahren worden ist. Wird z.B. diese Drehzahl von oben her gesehen nach unten unterschritten, d.h. sinkt sie unter eine Drehzahl von 2000 U/min ab, so wird der lastabhängige Schalter des Häckslers geschlossen und öffnet über das Zeitglied nach einer geringen Zeitverzögerung das zweite Relais, so dass der Stromkreis zwischen der Stromquelle und der Betätigungsvorrichtung der Kupplung unterbrochen wird. Gleichzeitig kann über das gleiche Relais der Stromkreis für eine Warnanlage geschlossen werden, so dass die Bedienungsperson am Fahrerstand des Mähdreschers über die Störgrösse am Strohhäcksler informiert wird, um daraufhin den Dreschvorgang zu drosseln bzw. zu unterbrechen.

In einer weiteren Ausführungsform der Erfindung ist es vorteilhaft, dass an den Stromkreis für eine Warnanlage die elektrische Betätigungseinrichtung für die Kupplung einer oder mehrerer Arbeitsorgane, insbesondere für die Kupplung einer Schneidwerksantriebsvorrichtung, einer Schrägförderantriebsvorrichtung oder eines Fahrantriebes angeschlossen ist. Wird beispielsweise der Antrieb für den Strohhäcksler unterbrochen und dabei gleichzeitig die Warnanlage in Betrieb gesetzt, so kann auch über diesen Stromkreis ein entsprechender Schalter für die elektrische Betätigungseinrichtung der Kupplung der Schneidwerksantriebsvorrichtung oder des Schrägfördererantriebes und auch der Kupplung des Fahrantriebes betätigt werden, um den Arbeitsprozess zu unterbrechen.

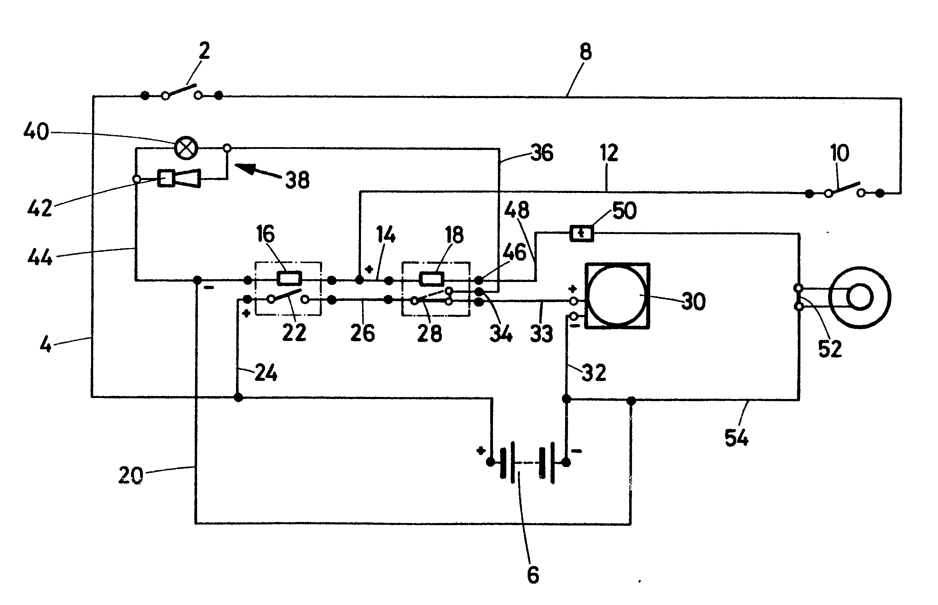

Anhand der Zeichnung wird ein Ausführungsbeispiel eines Strohhäckslers für den Mähdrescher nach der Erfindung erläutert.

In der Zeichnung ist mit 2 ein Schliesser bezeichnet, der einen in der Zeichnung nichtdargestellten Bedienungshebel für eine Dreschvorrichtung eines Mähdreschers zugeordnet sein kann und über den Stellweg des Hebels in eine Schliess- bzw. Öffnungsstellung gebracht werden kann. Der Schliesser 2 ist einerseits über eine elektrische Leitung 4 mit einer Stromquelle bzw. einer Batterie 6 verbunden und anderseits über eine elektrische Leitung 8 mit einem zweiten Schliesser 10, der im Bereich des Stellweges eines in der Zeichnung nichtdargestellten Strohhäckslers vorgesehen ist. Wird beispielsweise der Strohhäcksler aus seiner Ruhestellung in seine Betriebsstellung verschwenkt, so wird der Schliesser 10 über den Schwenkvorgang automatisch in eine Schliessstellung gebracht. Der Schliesser 10 ist ferner über eine elektrische Leitung 12 an eine Leitung 14 angeschlossen, die einenends an ein erstes Relais 16 und anderenends an ein zweites Relais 18 angeschlossen ist.

Das erste Relais 16 steht über eine weitere elektrische Leitung 20 mit der negativen Seite der Stromquelle 6 in Verbindung und wird bei geschlossenem Schliesser 2 und 10 über die Leitungen 12, 8 und 4 an die positive Seite der Stromquelle 6 angeschlossen. Das Relais 16 weist ebenfalls einen Schliesser 22 auf, der einerseits über eine elektrische Leitung 24 an die positive Seite der Stromquelle 6 angeschlossen ist und anderseits über eine elektrische Leitung 26 mit einem Wechselschalter 28 des zweiten Relais 18 verbunden ist. Befindet sich der Wechselschalter 28 in seiner ersten bzw. unteren Stellung, so ist die Leitung 26 des ersten Relais 16 über das zweite Relais 18 mit einer in der Zeichnung nichtdargestellten Betätigungseinrichtung einer Kupplung 30 für den Strohhäcksler verbunden, so dass die Betätigungseinrichtung in der Kupplung 30 mit Strom versorgt werden kann. Hierzu ist die Kupplung 30 über eine weitere elektrische Leitung 32 mit der negativen Seite der Stromquelle 6 verbunden. Wird der Wechselschalter 28 in eine zweite bzw. obere Stellung gebracht (siehe gestrichelte Stellung), so ist er mit einer zweiten Anschlussstelle 34 verbunden, die über eine elektrische Leitung 36 mit einer Warnanlage 38 verbunden ist. Die Warnanlage 38 kann eine Kontrollampe 40 und eine Hupe 42 aufweisen, über die die Bedienungsperson über die Störgrösse am Strohhäcksler informiert wird.

Ferner ist die Warnanlage 38 über eine elektrische Leitung 44 und über die elektrische Leitung 20 an die negative Seite der Stromquelle 6 angeschlossen. Das Relais 18 weist ferner eine dritte Anschlussstelle 46 auf, die über eine elektrische Leitung 48 und über ein Zeitglied 50 mit der einen Seite eines Öffners 52 verbunden ist, der als Drehzahlschalter ausgebildet sein kann. Die andere Seite des Öffners 52 ist über eine elektrische Leitung 54 mit der negativen Seite der Stromquelle 6 verbunden.

Die Arbeitsweise der Warnanlage 38 zur Betätigung der Kupplung 30 für den Strohhäcksler ist wie folgt:

Wird der Schliesser 2 über einen in der Zeichnung nichtdargestellten Hebel zur Betätigung der Dreschvorrichtung geschlossen, so steht die Stromquelle 6 über die elektrischen Leitungen 4 und 8 mit dem Schliesser 10 in Verbindung. Wird nun der Häcksler in seine Arbeitsstellung verschwenkt, so wird automatisch der Schliesser geschlossen und die elektrische Leitung 8 und somit auch die elektrische Leitung 12 mit Strom versorgt, so dass das erste Relais 16 an Spannung anliegt und dadurch den Schliesser 22 in eine Schliessstellung bringt. Befindet sich der Schliesser 22 in seiner Schliessstellung, ist somit die Stromquelle 6 über die elektrische Leitung 24, die elektrische Leitung 26, den Wechselschalter 28 des zweiten Relais 18 und über die Leitung 33 mit der Betätigungseinrichtung der Kupplung 30 für den Strohhäcksler verbunden. Nach diesem Schaltvorgang kann die Drehzahl des Strohhäckslers von 0 auf eine Drehzahl gebracht werden, die etwas oberhalb der Drehzahl 2000 liegt, so dass dann der Öffner 52 automatisch geöffnet wird. Da nun der Drehzahlschalter 52 seine Offen-Stellung eingenommen hat, wird das zweite Relais 18 über die Leitungen 54, 48 nicht mehr mit Strom versorgt und der Wechselschalter 28 bleibt in seiner unteren Stellung, in der die Betätigungseinrichtung der Kupplung 30 an die Stromquelle 6 angeschlossen bleibt.

Damit die Drehzahl des Strohhäckslers von einer Drehzahl 0 auf eine bestimmte Drehzahl hochgefahren werden kann, und zwar in einer bestimmten Zeiteinheit, die nicht grösser als 3 Sekunden sein sollte, verhindert in dieser Zeit das Zeitglied 50 die Stromversorgung zum Relais 18, so dass es den Wechselschalter 28 nicht in seine obere Stellung verschwenken kann und somit in dieser Zeit keine Stromunterbrechung für die Betätigungseinrichtung der Kupplung 30 eintritt. Wird jedoch innerhalb von 3 Sekunden die erforderliche Drehzahl für die Strohhäcksler nicht erreicht, wird über das Zeitglied 50 das Relais 18 mit Strom versorgt, so dass dann der Wechselschalter 28 in seine zweite bzw. obere Stellung verstellt wird, in der die Leitung 26 über den Anschluss 34 und die Leitung 36 mit der Warnanlage 38 verbunden wird. Hierdurch wird die Bedienungsperson am Fahrerstand des Mähdreschers über eine Störgrösse am Strohhäcksler informiert.

Unterschreitet in einem anderen Fall plötzlich die Drehzahl des Strohhäckslers einen bestimmten Wert oder sinkt beispielsweise die Drehzahl unter 2000 U/min ab, dann wird der Öffner 52 wieder geschlossen und das zweite Relais 18 über das Zeitglied 50 mit Strom versorgt, so dass dann der Wechselschalter 28 wieder in seine zweite bzw. obere Stellung verstellt wird, in der die Leitung 26 mit der Leitung 36 der Warnanlage 38 verbunden ist, d.h. bei einem derartigen Schaltvorgang wird die Bedienungsperson über eine erneute Störgrösse am Strohhäcksler informiert.

Die Bedienungsperson kann aufgrund dieser Information den Dreschvorgang für den Mähdrescher unterbrechen, um somit Beschädigungen an den Arbeitsorganen des Mähdreschers zu vermeiden, die z.B. bei Gutstau auftreten können. Gleichzeitig kann in vorteilhafter Weise der Stromkreis für die Warnanlage 38 auch mit einer Betätigungseinrichtung für die Kupplung des Fahrantriebes und/oder der Kupplung der Fördervorrichtung und der Dreschvorrichtung verbunden werden, so dass bei Auftreten einer Störgrösse am Strohhäcksler gleichzeitig auch die Betätigungseinrichtung dieser Kupplung derart geschaltet wird, dass auch diese Arbeitsorgane abgeschaltet werden können.

## Patentansprüche

1. Mähdrescher mit einer Vorrichtung zum Erfassen einer Störgrösse an Arbeitsorganen und mit einer elektrisch betätigbaren, zwischen Verbrennungskraftmaschine und dem Arbeitsorgan vorgesehenen Kupplung (30) und mindestens einem in Abhängigkeit der Drehzahl der drehenden Teile betätigbaren Schalter (52) zum Öffnen oder Schliessen eines Stromkreises für die Vorrichtung zur Erfassung der Störgrösse, dadurch gekennzeichnet, dass neben dem drehzahlabhängigen ersten Schalter (52) ein über diesen beeinflussbarer zweiter Schalter (28) zum Abschalten der Kupplung (30) vom Arbeitsorgan und ein im Stromkreis des ersten Schalters (52) liegendes Zeitglied (50) vorgesehen ist.

2. Vorrichtung nach Anspruch 1, dadurch gekennzeichnet, dass einem Hebel zur Betätigung einer Dreschvorrichtung ein Schliesser (2) zugeordnet ist, der einerseits mit einer Stromquelle (6) verbunden ist, anderseits über einen über die Schwenkbewegung eines Strohhäckslers als Arbeitsorgan betätigbaren Schliesser (10) ein erstes und zweites Relais (16, 18) mit Strom versorgt, wobei das zweite Relais (16) über einen dritten Schalter (22) den Stromkreis zwischen Stromquelle und Kupplung (30) schliesst, während das erste Relais (18) bei Auftreten einer Störgrösse am Strohhäcksler über den zweiten Schalter (28) den Stromkreis zwischen Stromquelle und Kupplung unterbricht und den Stromkreis einer Warnanlage (38) schliesst.

3. Vorrichtung nach Anspruch 1 und 2, dadurch gekennzeichnet, dass an den Stromkreis für eine Warnanlage (38) die elektrische Betätigungseinrichtung für die Kupplung einer oder mehrerer Arbeitsorgane, insbesondere für die Kupplung einer Schneidwerksantriebsvorrichtung, einer Schrägförderantriebsvorrichtung oder eines Fahrantriebes angeschlossen ist.

## Claims

1. A combine harvester having a mean for detecting a fault parameter at working members, an electrically operable clutch (30) which is disposed between an internal combustion engine and the working member, and at least one switch (52) which is actuable in dependence on the speed of rotation of the rotating members, for opening or closing a circuit for the means for detecting the fault parameter, characterised in that, besides the rotary speed-dependant first switch (52), there is provided a second switch (28) which can be controlled by way of the first switch, for disconnecting the clutch (30) from the working member, and a timing member (50) which is disposed in the circuit of the first switch (52).

2. Apparatus according to claim 1 characterised in that associated with a lever for actuating a threshing arrangement is a contact means (2) which on the one hand is connected to a current source (6) and on the other hand supplies current to a first and a second relay (16, 18) by way of a contact means (10) which is actuable by way of the pivotal movement of a straw cutter as the working member, wherein the second relay (16) closes the circuit between the current source and the clutch (30) by way of a third switch (22) while, when a fault parameter occurs at the straw cutter, the first relay (18), by way of the second switch (28), interrupts the circuit between the current source and the clutch and closes the circuit of a warning means (38).

3. Apparatus according to claim 1 and claim 2 characterised in that connected to the circuit for a warning means (38) is the electrical operating means for the clutch of one or more working members, in particular for the clutch of a cutting mechanism drive arrangement, an inclined conveyor drive arrangement or a travelling drive.

## Revendications

1. Moissonneuse-batteuse comportant un dispositif pour détecter une grandeur perturbatrice sur des organes actifs ou organes de travail et un accouplement (30) prévu entre un moteur à combustion interne et l'organe actif et pouvant être actionné électriquement, et au moins un commutateur (52) pouvant être actionné en fonction du régime des organes rotatifs, pour ouvrir ou fermer un circuit destiné au dispositif de détection de la grandeur perturbatrice, caractérisée en ce qu'il est prévu, outre le premier commutateur (52) agissant en fonction du régime, un second commutateur (28) pouvant être influencé par le précédent pour assurer la mise hors circuit de l'accouplement (30) de l'organe actif, et un élément de temporisation (50) prévu dans le circuit du premier commutateur (52).

2. Dispositif suivant la revendication 1, caractérisé en ce qu'il est prévu, en combinaison avec un levier servant à actionner un dispositif de battage, un interrupteur (2) qui, d'une part, est relié à une source de courant (6) et qui, d'autre part, alimente en courant, par l'intermédiaire d'un interrupteur (10) pouvant être actionné par le mouvement de basculement d'un hache-paille servant d'organe actif, un premier et un second relais (16, 18), le second relais (16) fermant, par l'intermédiaire d'un troisième commutateur (22), le circuit prévu entre une source de courant et l'accouplement (30), tandis que le premier relais (18) interrompt lorsqu'une grandeur perturbatrice apparaît sur le hache-paille, le circuit prévu entre la source de courant et l'accouplement par l'intermédiaire du second commutateur (28), et ferme le circuit d'un système avertisseur (38).

3. Dispositif suivant les revendications 1 et 2, caractérisé en ce que le dispositif d'actionnement électrique prévu pour l'accouplement d'un ou plusieurs organes actifs, en particulier pour l'accouplement d'un dispositif d'entraînement d'un mécanisme de coupe, d'un dispositif d'entraînement d'un transporteur-élévateur ou d'un système de propulsion raccordé au circuit prévu pour un système avertisseur (38).